## Europäisches Patentamt
## European Patent Office
## Office européen des brevets

(19)

(11) Publication number: **0 099 977**
**B1**

(12)

# EUROPEAN PATENT SPECIFICATION

(45) Date of publication of patent specification: **08.04.87**

(21) Application number: **83105429.1**

(22) Date of filing: **01.06.83**

(51) Int. Cl.⁴: **H 02 P 7/00, B 41 J 19/20, G 05 D 13/62**

(54) **Digital servo system for motor control.**

(30) Priority: **14.07.82 US 397950**

(43) Date of publication of application:
**08.02.84 Bulletin 84/06**

(45) Publication of the grant of the patent:
**08.04.87 Bulletin 87/15**

(84) Designated Contracting States:
**DE FR GB IT**

(56) References cited:
**US-A-4 147 967**
**US-A-4 259 626**
**US-A-4 270 868**

**IBM TECHNICAL DISCLOSURE BULLETIN; vol. 23, no. 9, February 1981, New York, R.K. BETHEL et al.:"Motor speed control for a type writer", pages 4202-4204**

(73) Proprietor: **International Business Machines Corporation**
**Old Orchard Road**
**Armonk, N.Y. 10504 (US)**

(72) Inventor: **Cavill, Barry Richard**
**4496 N.W. 2nd Avenue**
**Boca Raton Florida 33431 (US)**
Inventor: **Schulz, Raymond Andrew**
**1057 N.W. 6th Drive**
**Boca Raton Florida 33432 (US)**

(74) Representative: **Colas, Alain**
**Compagnie IBM France Département de Propriété Intellectuelle**
**F-06610 La Gaude (FR)**

Courier Press, Leamington Spa, England.

# 0 099 977

## Description

### Background of the invention
### Field of the invention

This invention relates in general to digital servo systems and relates more particularly to such systems for controlling the speed, direction of motion, acceleration and deceleration of a load-driving motor.

### Description of the prior art

The field of closed loop servo systems for controlling the position of a movable element is a very well worked one. Among the references in this field which are pertinent to the present invention are the following.

U.S. 3,978,521, Langer et al, deals with apparatus to accomplish measurement of phase differences between pulses supplied by a tachometer and those derived from a synchronization track on a tape. The measured value is used as a time delay so that new data recorded in a "new recording" mode and the new synchronization track established follows the correct time (distance) after previously recorded synchronization pulses.

The present digital servo system does not use any phase relationships to accomplish motor control.

U.S. 4,216,419, Van Dam et al, deals with a system for correcting the inherent manufacturing tolerances associated with a rotary encoder disk so that precise phase measurements will not include the tolerances as an incorrect phase measurement. For a tachometer disk with 'n' pulses per revolution, 'n' phase error signals are saved in 'n' memory locations to allow comparison of the pulses with a reference timing signal. When used in a control system, the 'n' phase error signals are read out in synchronization with the 'n' tachometer pulses and are added with opposite polarity to the output of the phase error detector of the control system so that the positional tolerances of the tachometer do not affect the true measured phase value.

The present digital servo does not use phase measurements at all.

U.S. 3,196,421, Grace et al, compares the phase of pulse signals from an encoder against a constant frequency reference pulse train corresponding to the desired speed. The phase measurement difference produces a voltage which changes the motor speed to bring the measured signals back into alignment with the reference.

The present digital servo does not use phase measurement. Also, the reference pulses used in the present digital servo system vary in frequency depending on whether acceleration, deceleration, or constant speed motion is desired. The numeric difference in the number of pulses received from the encoder and reference pulse generator is used to provide continuously controlled acceleration, deceleration, and constant speed motion.

U.S. 3,889,169, Hirshman et al, describes a system for storage of magnetic cylinders. To accomplish this, two motors must achieve the same instantaneous speed at the moment of cylinder transfer. This is accomplished by rotating one motor at a constant velocity and providing speed information by way of an attached pulse encoder. The second motor has a unique encoder attached to its shaft to provide velocity information on that motor. Speed matching to accomplish transfer is done by phase comparing the pulses from each motor encoder and using the phase difference to control the speed of the second motor.

The present digital servo does not use phase measurements.

U.S. 3,211,967, Akiyama et al, utilizes a special divider circuit to allow comparison of motor speed pulses against a reference pulse train. The phase difference between these two pulses is measured and provides a DC voltage correction corresponding to the phase difference.

As stated above, the present digital servo does not use phase detection.

U.S. 4,240,014, Muller utilizes a timing comparison of a reference pulse train to a measured pulse train. If the speed of the motor is correct, the measured pulses will fall within the command reference pulse gaps. The time from a command pulse to the next subsequent trigger pulse is used to charge a capacitor whose voltage will provide a signal to control the motor voltage and thereby, speed.

Again, the present digital servo does not measure the phase relationship of pulses.

U.S. 4,243,921, Tamura et al, controls motor speed by digital measurement of the phase difference between a reference pulse train and measured pulse signals from an encoder. The phase difference is measured by counting fast clock pulses between the two pulses being tested, with the result saved in a counter which is used to drive a pulse width modulation amplifier.

In the present system the numeric difference in the pulses received is digitally filtered to provide not only instantaneous drive power application but also to provide integrating system compensation. Again, no phase relationship of pulses is used.

U.S. 3,386,021, Fisher, shows a motor control system which employs comparison of a reference frequency with a measured frequency to provide drive to a DC motor. The desired speed frequency is set as a reference and the error output is positive if $F_{ref}$ is greater than $F_{meas}$ until the measured frequency is equal to the reference frequency, at which point the error output begins pulsing. If the starts out with $F_{ref}$ less than $F_{meas}$, the output is zero until the two frequencies are equal. The time average error output pulsing signal is converted to a duty cycle dependent voltage which is used to drive the motor. Only unidirectional motion is defined and acceleration and deceleration are uncontrolled.

2

# 0 099 977

US—A—4 270 868 discloses a digital motor control system in which the time between discreet positions of the motor shaft is compared with a desired time and the difference is registered. This difference is then converted to a pulse-width-modulated signal which directly controls the rotational velocity of the motor, increasing or decreasing it as necessary. Only unidirectional motion is defined and acceleration or deceleration are uncontrolled. The reference pulses used in the present digital servo system vary in frequency depending on whether acceleration, deceleration or constant speed motion is desired.

Summary of the invention

In view of the above, it is a principle object of the present invention to accurately control the speed, direction of motion, acceleration and deceleration of a load-driving motor.

The object of the invention is defined in claim 1 and preferable embodiments in claims 2 to 8.

More particularly, the present digital servo system utilizes a unique ramped control frequency reference system such that the reference pulse frequency increases during acceleration until a desired microcomputer-selected speed is achieved (constant frequency). Then, when stopping is selected, the frequency is decreased regularly until zero velocity is reached. This ramped controlled reference frequency permits controlled acceleration and deceleration as well as providing an accurate speed reference. The output of the digital servo system is a pulse width modulated output such that the duty cycle of the output determines the amount (percent) of power applied to the motor.

The numeric difference between the number of reference pulses received versus the number of pulses measured from an optical encoder attached to the motor is used to control the drive duty cycle. The pulses from both the reference and the encoder are used immediately when received to provide instantaneous power application correction and are also integrated to provide feedback stability and drive control. Also, the control microcomputer allows the introduction of a special "feed forward" drive component (an initial offset drive) to permit faster startup (motor drive) before motion pulses are received from the motor encoder.

The system described herein controls a servomotor completely with digital components. Internal control references are not voltages but pulse rates, which can be very precise and not subject to component parameter or temperature variations as in analog systems. The motor acceleration and final steady state velocity are specified by a microcomputer, allowing for many possible speeds with no additional circuitry required. Since speed regulation and control is done uniquely using pulse rate, not phase, comparisons, speed errors are seen as pulse rate differences which are translated to differences in pulse counts. This error detection mechanism is very accurate, and because of its integrating nature, tends to drive all speed variations to zero, making for a well controlled system.

Unique direction sign control circuitry permits bidirectional drive and determines whether an increase or decrease in drive is required. The microcomputer digitally filters the drive increase and decrease requests to provide a desired modulation control count signal. The modulation count from the microcomputer is then used to formulate a digital pulse width modulator drive signal. This is accomplished by comparing the modulation count against the output of a digital sawtooth counter circuit. This entire system does the traditionally analog motor control function with accuracy and at lower cost and it is easier to test.

Brief description of the drawings

Fig. 1 shows the overall system including the microcomputer and the elements of the servo system applied to the control of a bidirectional printer carriage;

Fig. 2 illustrates the overall system including the commands generated by the printer controller;

Fig. 3 illustrates the clock generation section which develops the timing pulses for the rest of the system;

Fig. 4 illustrates the reference pulse generation circuitry which generates the command pulses;

Fig. 5 shows circuitry for direction detection and generation of synchronized encoder pulses from the motion of the printer carriage;

Fig. 6 graphically illustrates the operation of the reference pulse generator for acceleration and deceleration;

Fig. 7 illustrates one form of digital filter for use in the present invention;

Fig. 8 shows the circuitry for utilizing the modulated drive control signal; and

Fig. 9 illustrates details of the motor power drive circuitry.

Description of the preferred embodiment

General operation

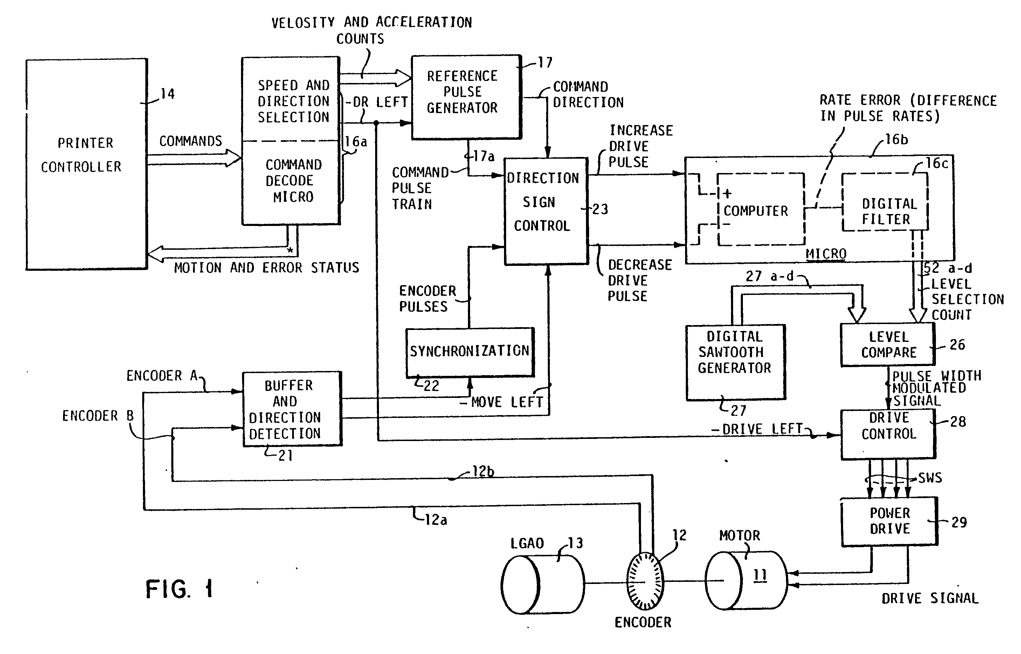

Referring to Fig. 1, the servo system of this invention drives a brush DC motor 11 with an attached optical encoder 12 which in turn drives, through a belt, a load such as a printhead carriage 13. Motor 11 moves head carriage 13 bidirectionally, maintaining a precise velocity in both directions while printing. Two signals are generated by optical encoder 12 attached to motor 11. These encoder signals ("A" and "B") on lines 12a and 12b, respectively, are symmetrical and phase shifted by 90° from one another, with encoder "A" leading encoder "B" when moving to the left. At the end of each motion (print cycle), direction reversal takes place, with the velocity decreasing to zero and then increasing in the opposite direction until

3

steady state final velocity is reached. The final linear velocity is specified by a printer controller 14, so a number of final speeds must be supported by the drive system. The present digital servo system is applicable to any DC motor (brush or brushless) in which precise velocity control is required.

Commands to move head carriage 13 are given to a portion 16a of a head control microcomputer 16 by printer controller 14. The supplied information consists of speed and direction data, along with error reset and power on reset signals. Head control microcomputer 16 returns motion and error status to printer controller 14. It also commands the direction of motor drive and determines the motor acceleration and final velocity by selecting values to be transmitted to a reference pulse generator 17.

Reference pulse generator 17 provides a pulse train in which the time between pulses decreases until a steady state fixed rate is achieved. This pulse train is then used as a command pulse train on a line 17a to compare against the encoder pulses received from the moving motor. The encoder pulses on lines 12a, 12b are buffered in circuit 21, synchronized with the system in circuitry 22 and sent to the direction sign control circuitry 23, which also receives the command pulse train on line 17a.

Direction sign control block 23 determines whether a pulse should be generated indicating that the motor drive should be increased or a pulse should be generated to decrease the motor drive. Increasing or decreasing drive is determined by the direction of drive (from the reference pulse generator 17), by the actual direction of motion (from the encoder buffer section 21) and by the pulses received from the motor and the reference pulse generator.

A portion 16b of microcomputer 16 (or external hardware circuitry) then keeps track of the number of increase drive versus decrease drive pulses. The net difference between these two pulse counts within a time period translates into a difference in pulse rates or a "rate error". This rate error is then used by the microcomputer as an input to a "digital filter" 16c. The digital filter output from the microcomputer is a drive level selection count which determines the drive duty cycle.

This "level selection count" is compared in a level compare circuit 26 with a digital sawtooth value generated by the clocking circuitry in a circuit 27. The output is a minus when the sawtooth value is less than the "level selection count" and plus when the sawtooth value is greater than or equal to the "level selection value". This results in an output pulse train to drive control circuit 28 with constant frequency but varying pulse widths depending on the value of the "level selection count".

This pulse width modulated output is then used to determine the duty cycle of the drive from power drive circuit 29 to the motor. The drive control circuitry selects the proper transistors of a "H" bridge driver to obtain the drive direction desired.

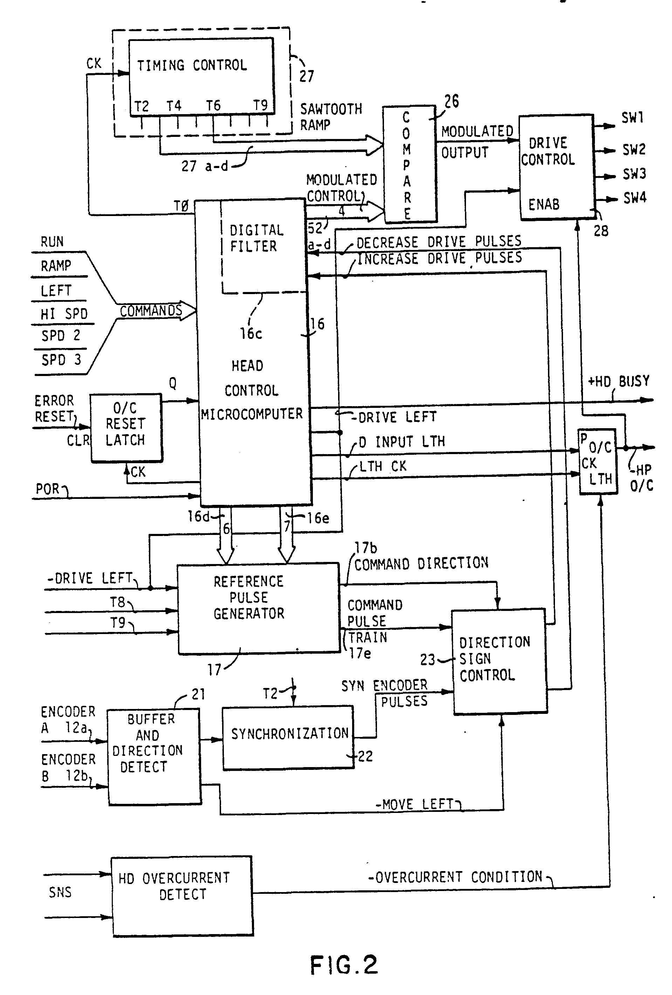

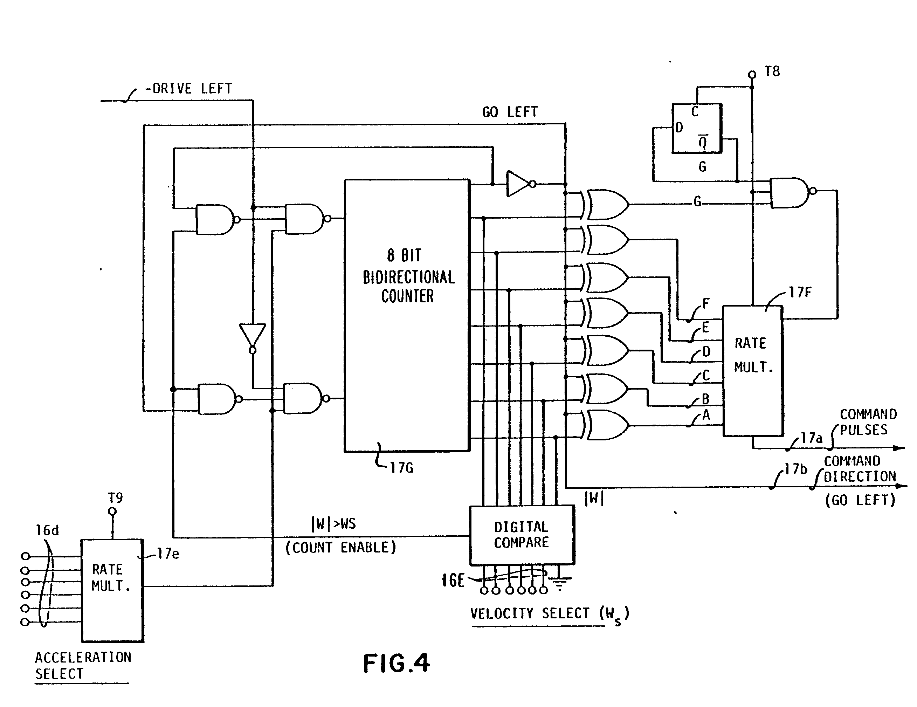

An overview of the digital control system is shown in Fig. 2. Motion begins when a command is received from printer controller 14 by head drive microcomputer 16. This command is either "RAMP" (move slowly) or "RUN" with a selected speed ("HI SPEED", "SPD 2", "SPD 3") in the desired direction (−"LEFT" for drive left or + "LEFT" for drive right). The head microcomputer decodes the input command lines and begins motion by activating the acceleration and velocity select lines 16d, 16e (Fig. 4) to reference pulse generator 17.

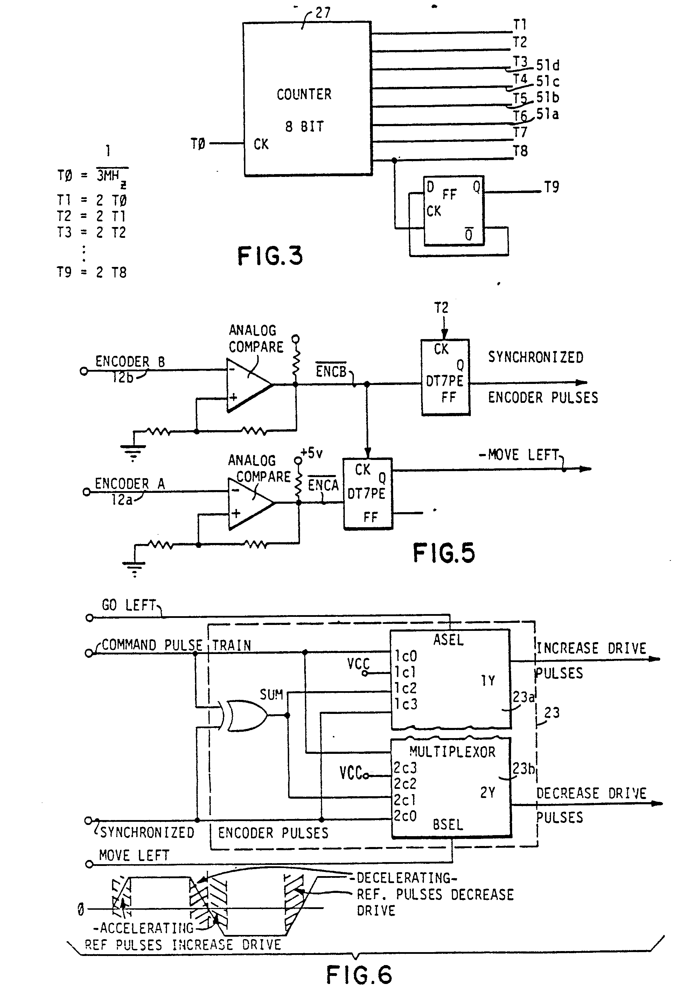

A clock generation section (shown in Fig. 3), develops the timing pulses used throughout the system from a crystal oscillator associated with the microcomputer. The reference pulse generator consists of the command pulse generation circuitry (shown in Fig. 4). This section produces two outputs, a command pulse output on line 17a and a direction command output ("GO LEFT") on line 17b. When the drive direction is specified and the velocity select inputs are set to nonzero, the pulse output increases frequency regularly (determined by clock 19), until a maximum is reached. The maximum frequency is determined by the velocity select value (ws). This frequency remains at this maximum until the direction drive (− "DRIVE LEFT") is changed. This causes the frequency to decrease at regular intervals to zero. If stopping is desired, the velocity select count is set to zero to inhibit the generation of command pulses. If head motion in the opposite direction is desired, the desired new velocity select count is applied, and the number of command pulses increases to the desired frequency with the direction output (GO LEFT) opposite the previous state.

The frequency of the command pulses on line 17a is derived from a seven bit rate multiplier 17f. The output frequency is a fraction of the clock frequency supplied to the rate multiplier. The frequency is determined by the following equation

$$F_{out}=F_{in}\frac{GX64+FX32+EX16+DX8+CX4+BXZ+A}{128}$$

The fraction is determined by the output of an eight bit counter 17g which contains the currently desired frequency count.

The counter is used in an offset binary form with the most significant bit of the counter determining the sign bit. This sign bit is used with the exclusive OR gates to ensure that the frequency-determining count applied to the rate multiplier is the absolute value of the desired rate count. The final steady state speed is selected by comparing the counter output with a velocity select count from the microcomputer. Once this velocity select count is reached, the comparator output shuts off the counter, thereby inhibiting further changes.

The pulses which are counted are derived from another rate multiplier, 17e, and whether these pulses cause a count up or a count down is determined by the control line −"DRIVE LEFT" from the microcomputer. The frequency of these pulses which are counted determines how fast the output count changes and thereby controls the acceleration of the system. This acceleration again can be controlled by the microcomputer by selecting an acceleration count on lines 16d that determines what fraction of the rate multiplier clock frequency is to be passed to the output.

Derivation of the changing control pulses using counters and rate multipliers in this fashion is a unique method of providing control command information to be used in control applications. The pulses, along with the direction signal, are used to provide bidirectional command pulses which are used for comparison with measured encoder pulses representing motor speed.

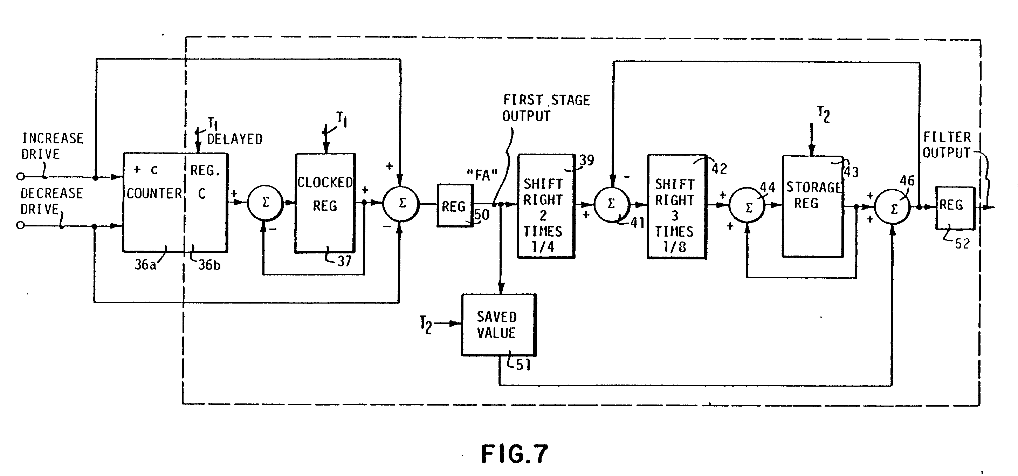

The two encoder signals from the motor are buffered and used to determine direction of motion by feeding the "B" encoder signal on line 12b to the clock and the "A" encoder signal on line 12a to the input of a D-type flip-flop (Fig. 5). The flip-flop output reflects the detected actual direction of motion of the motor. This signal is used in the direction sign control segment. The "B" encoder signal is then synchronized with a system clock time (T2) to provide the input motor speed sensing pulse. The synchronization is performed to ensure that the encoder pulse and command pulse do not reach direction sign control circuitry at the same time.

The unique direction sign control section 23 of the present invention determines whether the command pulses from reference pulse generator 17 and the synchronized encoder pulses shown in Fig. 5 are used to provide increase or decrease signal pulses to the microcomputer digital filter. Whether the command pulse train activates the increase or decrease pulse signal to the microcomputer digital filter 16c is determined by the direction of motion, ("MOVE LEFT"), the sign of the reference pulse train ("GO LEFT"), and the drive direction command ("DRIVE LEFT").

The "DRIVE LEFT" line selects which way current will pass through the motor and the other two control lines are used by the direction sign control block to determine the polarity of the pulses counted. This particular section is important to ensure the "signs" of the feedback control loop are correct, because the two input signals used to determine increasing or decreasing drive are absolute value signals (pulse rates) and by themselves contain no directional information. The direction sign control logic is designed such that the reference pulses increase the drive (the measured pulses decrease the drive) when accelerating the motor, either right to left, or left to right. Also, when decelerating, the reference pulses decrease the drive and the measured pulses increase the drive. The logic must also provide the proper feedback when the polarity of the reference pulses is opposite the polarity of actual motion.

The two multiplexers 23a, 23b are acting as general logic elements (a combination of gates) to selectively switch either the command pulses or the synchronized encoder pulses to increase output or decrease output, depending on the desired feedback polarity.

Digital filtering in filter 16c may take two stages or possibly just one. The first stage of filtering described is unique in that the input pulses are fed to the outputs almost immediately along with additional filtering action taking place. This promotes fast response to system inputs. The output of the filter is a level selection count which is used in level comparison circuitry 26 to determine the drive duty cycle.

The digital filter is implemented by the microcomputer, with the microcomputer performing all numerical manipulations with results (values) saved in microcomputer registers.

The filtering operation is shown diagrammatically in Fig. 7 with the first stage filter operating as follows: Each time a pulse is received requesting a drive increase, the output register "FA"50 (a microcomputer register) is incremented by one. Also, each time a pulse is received requesting a drive decrease, output register "FA"50 is decremented by one.

The net sum of the increase and decrease pulses for the system clock time period "$T_1$" is accumulated in a counter 36a. The output of a clocked register 37 is subtracted from the current non-updated output of the "C" register 36b, with the result becoming the new clocked register output which then becomes the output of the first stage of the filter "FA". Then the newly accumulated value of the "C" counter 36a is passed to the "C" register 36b to be used during the next $T_1$ time period.

The second stage of the filter is a more classical filter. Each "$T_2$" microseconds the output count from the first stage is saved in register 51 and the first stage output is then shifted right twice in a stage 39 giving 1/4 of the value. Note that digital shifting is equivalent to scaling an analog system. The current output count of the digital filter (saved in register 51) is then subtracted from the shifted filter input from stage 39 in a stage 41, with the result then shifted right three times more, shown schematically as element 42. This shifted value is then added in a stage 44 to the contents of storage register 43 giving a new storage register value. This register value is then added in a stage 46 with the saved first stage input 51 to give the final filter output saved in register 52. The most significant four bits of this filter output are used to provide the level selection count.

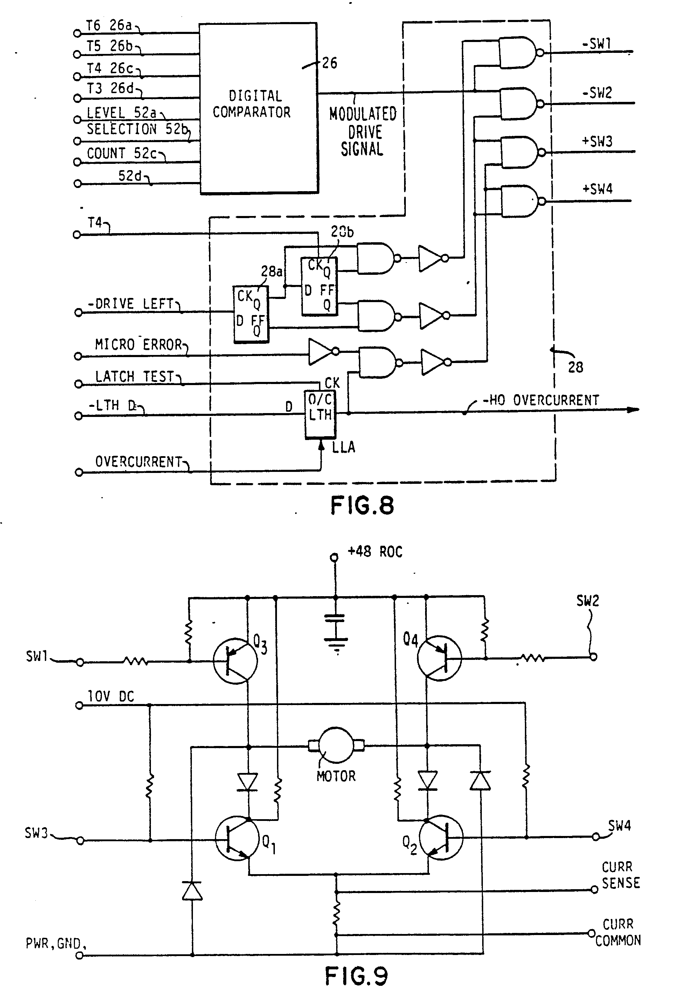

The level selection count is used to provide modulation control as shown in Fig. 8. A free running counter (part of the clock generation circuitry in Fig. 3), generates a digital sawtooth which appears on four input lines 26a, 26b, 26c, 26d of a digital comparator 26 and automatically resets itself when the 4-bit counter overflows. Digital comparator 26 compares the 4-bit level selection count appearing on input lines 52a, 52b, 52c, 52d to the sawtooth signal on lines 26a—26d. The output of the comparator is plus whenever the digital sawtooth value is less than the level selection count and minus when the sawtooth value is greater than or equal to the level count. This creates a constant period waveform with a varying duty cycle that is the desired pulse width modulated output. As the level selection count increases, the drive duty cycle increases, and as the level count decreases, the drive duty cycle decreases.

The modulated drive signal then goes to the drive control stage 28 which amplifies the modulated drive signal control sent to the power driver section shown in Fig. 9. The direction of motor drive is determined by the control line —"DRIVE LEFT" shown in Fig. 8. This control line is used to determine whether the outputs SW1 and SW4 are active or whether the outputs SW2 and SW3 are active, moving the motor in the opposite direction. The lactches in the drive control section 28a and 28b in Fig. 8 are to ensure that all drive transistors are shut off for a short time when changing direction, to prevent current spikes and prevent SW1 and SW3 or SW2 and SW4 outputs from becoming active at the same time. If an error occurs, either a microcomputer detected error or an overcurrent error, the drive of all transistors is disabled.

**Claims**

1. A digital servo system for controlling a bidirectional print carriage operable at different velocities, comprising means (16a) for generating a velocity select count representing a desired velocity for said carriage and a reference pulse generator (17) for generating command pulses said system being characterized in that:—

said command pulses have a frequency determined by said velocity select count and represent the desired velocity of said carriage,

and in that it further comprises:

direction sign control means (23) for comparing said command pulses with a measure of the actual velocity of said carriage to generate increase drive pulses or decrease drive pulses depending on the results of said comparison,

counting means (16b) for counting the number of increase drive pulses and the number of decrease drive pulses within a given time period to generate a rate error signal,

drive means (11, 29) for driving said carriage, and

power drive control means (28) for supplying power to said drive means as a function of said rate error signal.

2. Apparatus in accordance with claim 1, including digital filter means (16c) connected to the output of said counting means for digitally filtering said rate error signal to generate a level select count.

3. Apparatus in accordance with claim 2 including level compare means (26) connected to the output of said digital filter means (16c) for comparing said level select count with a reference signal to produce a level compare output signal,

said power drive control means (28) being responsive to said level compare output signal in supplying power to said motor (11).

4. Apparatus in accordance with claim 3 in which said reference signal is a digital sawtooth signal.

5. Apparatus in accordance with claim 3 or 4, in which said level compare output signal is a pulse modulated signal for controlling said power drive control means.

6. Apparatus in accordance with any one preceding claims, in which said reference pulse generator (17) includes first and second rate multipliers (17E, 17F).

7. Apparatus in accordance with claim 6, including an eight bit bidirectional counter (17G) whose output is supplied as an input to one of said rate multipliers to generate said command pulses.

8. Apparatus in accordance with claim 7 in which the other of said rate multipliers controls the content of said command pulses representing acceleration of said driving means.

**Patentansprüche**

1. Ein digitales Servosystem für die Steuerung eines in zwei Richtungen beweglichen Druckwagens, der in verschiedenen Geschwindigkeiten betrieben werden kann, mit Mitteln (16a) für die Erzeugung einer Geschwindigkeitsauswahlzählung, welche eine gewünschte Geschwindigkeit für den besagten Druckwagen darstellt, und eine Referenztaktgenerators (17) für die Erzeugung von Steuerimpulsen, wobei besagtes System dadurch gekennzeichnet ist, dass:—

die besagten Steuerimpulse eine Frequenz besitzen, welche durch die besagte Geschwindigkeitsauswahlzählung ermittelt wird und die gewünschte Geschwindigkeit des besagten Wagens darstellt,

und ferner dadurch, dass es enthält:

Richtungsvorzeichensteuermittel (23) für den Vergleich der besagten Steuerimpulse mit einer Messung der jeweiligen Geschwindigkeit des besagten Wagens, um Beschleunigungsimpulse oder Verlangsamungsimpulse zu erzeugen, abhängig von den Ergebnissen des besagten Vergleiches,

Zählmittel (16b) für die Zählung der Anzahl der Beschleunigungsantriebsimpulse und der Anzahl der Verlangsamungsantriebsimpulse, innerhalb einer gegebenen Zeitspanne für die Erzeugung eines Geschwindigkeitsfehlersignals,

Antriebsmittel (11, 29) für den Antrieb des besagten Wagens,

und Mittel für die Steuerung der Antriebsleistung (28) für die Abgabe von Leistung an die besagten Antriebsmittel in Abhängigkeit von dem besagten Fehlersignal.

2. Gerät gemäss Anspruch 1, einschliesslich digitaler Filtermittel (16c), angeschlossen an den Ausgang der besagten Zählmittel für die digitale Filterung des besagten Fehlersignals für die Erzeugung einer Pegelauswahlzählung.

3. Gerät gemäss Anspruch 2, einschliesslich Pegelvergleichsmittel (26), angeschlossen an den Ausgang der besagten digitalen Filtermittel (16c) für den Vergleich der besagten Pegelauswahlzählung mit einem Bezugssignal, zur Erzeugung eines Pegelvergleichsausgangssignals,

Besagte Leistungsantriebssteuermittel (28), ansprechend auf das besagte Pegelvergleichsausgangssignal für die Abgabe von Leistung an den besagten Motor (11).

4. Gerät gemäss Anspruch 3, in dem das besagte Referenzsignal ein digitales Sägezahnsignal ist.

5. Gerät gemäss Anspruch 3 oder 4, in dem das besagte Pegelvergleich ausgangssignal ein Signal mit modulierter Impulsbreite für die Steuerung der besagten Antriebsleistungssteuermittel ist.

6. Gerät gemäss einem der beliebigen der vorangehenden Ansprüche, in dem der besagte Referenzimpulsgenerator (17) erste und zweite Verhältnismultipliziervorrichtungen (17E, 17F) enthält.

7. Gerät gemäss Anspruch 6, mit einem 8 Bit-Zähler mit zwei Richtungen (17G), dessen Ausgang als Eingang an eine der besagten Verhältnismultipliziervorrichtungen gelegt wird, um die besagten Steuerimpulse zu erzeugen.

8. Gerät gemäss Anspruch 7, in dem die andere der besagten Verhältnismultipliziervorrichtungen den Inhalt der besagten Steuerimpulse steuert, der die Beschleunigung der besagten Antriebsmittel darstellt.

## Revendications

1. Un système d'asservissement numérique pour commander un chariot d'impression bidirectionnel fonctionnant à différentes vitesses, comprenant des moyens (16a) pour générer un compte de sélection de vitesse représentant une vitesse désirée pour ledit chariot et un générateur d'impulsions de référence (17) pour générer des impulsions de commande, ledit système étant caractérisé en ce que:—

lesdites impulsions de commande ont une fréquence déterminée par ledit compte de sélection de vitesse et représentent la vitesse désirée dudit chariot,

et en ce qu'il comprend en outre:

des moyens de commande de signes de sens (23) pour comparer lesdites impulsions de commande à une mesure de la vitesse réelle dudit chariot pour générer des impulsions de commande croissantes ou décroissantes suivant les résultats de ladite comparaison,

des moyens de comptage (16b) pour compter le nombre des impulsions de commande croissantes et le nombre des impulsions de commande décroissantes à l'intérieur d'une période de temps donnée pour générer un signal d'erreur de vitesse,

des moyens de commande (11, 29) pour commander ledit chariot, et

des moyens de commande de puissance (28) pour délivrer de la puissance auxdits moyens de commande en fonction dudit signal d'erreur de vitesse.

2. Dispositif selon la revendication 1 comprenant des moyens de filtrage numérique (16c) connectés à la sortie desdits moyens de comptage pour filtrer numériquement ledit signal d'erreur de vitesse afin de générer un compte de sélection de niveau.

3. Dispositif selon la revendication 2 comprenant des moyens de comparaison de niveaux (26) connectés à la sortie desdits moyens de filtrage numérique (16c) pour comparer ledit compte de sélection de niveau à un signal de référence pour produire un signal de sortie de comparaison de niveaux,

lesdits moyens de commande de puissance (28) étant sensibles audit signal de sortie de comparaison de niveaux pour l'application de puissance audit moteur (11).

4. Dispositif selon la revendication 3, dans lequel ledit signal de référence est un signal en dent de scie numérique.

5. Dispositif selon la revendication 3 ou 4 dans lequel ledit signal de sortie de comparaison de niveaux est une signal modulé par impulsions de largeur variable pour commander lesdits moyens de commande de puissance.

6. Dispositif selon l'une quelconque des revendications précédentes dans laquelle ledit générateur d'impulsions de référence (17) comprend des premier et second multiplicateurs de vitesse (17E, 17F).

7. Dispositif selon la revendication 6 comprenant un compteur bidirectionnel à huit bit (17G) dont la sortie est délivrée comme une entrée à l'un desdits multiplicateurs de vitesse pour générer lesdites impulsions de commande.

8. Dispositif selon la revendication 7 dans laquelle l'autre desdits multiplicateurs de vitesse commande le contenu desdites impulsions de commande représentant l'accélération desdits moyens de commande.

FIG. 1

FIG.2

**0 099 977**

FIG.3

$T\emptyset = \overline{3MH_z}$

$T1 = 2\ T\emptyset$

$T2 = 2\ T1$

$T3 = 2\ T2$

⋮

$T9 = 2\ T8$

FIG.5

FIG.6

3

FIG.4

FIG.7

FIG.8

FIG.9